# EUROPEAN PATENT SPECIFICATION

(11) **EP 2 877 734 B1**
(45) Date of publication and mention of the grant of the patent: **21.12.2016**
(21) Application number: 13736942.7
(22) Date of filing: 27.06.2013
(51) Int. Cl.: F02M 37/00, F02B 63/04, F16M 1/00, F16M 5/00

(54) **BASE FOR A GENERATOR**
GRUNDTRÄGER FÜR EINEN ELEKTRISCHEN GENERATOR
SUPPORT DE BASE POUR UN GÉNÉRATEUR ÉLECTRIQUE

(30) Priority: 27.07.2012 GB 201213432
(43) Date of publication of application: 03.06.2015
(73) Proprietor: Caterpillar (NI) Limited, Larne Co. Antrim BT40 1EJ (GB)
(72) Inventor: SPRATT, Gordon, Newtownabbey Antrim BT36 5WH (GB); LAWSON, John, Belfast BT8 6JU (GB); KELLY, Ian, Belfast BT3 9DT (GB)
(74) Representative: BRP Renaud & Partner mbB Rechtsanwälte Patentanwälte Steuerberater
(86) International application number: PCT/GB2013/051707
(87) International publication number: WO 2014/016555

(56) References cited:
- WO-A2-2004/024572
- US-A- 5 762 232
- US-A1- 2002 069 840

## Description

### Technical Field

The present disclosure relates to a base for a generator, and more particularly to a base including an inbuilt fuel tank.

### Background

Electrical generator commonly comprises a prime mover (usually a gasoline-powered internal combustion engine), an alternator, a fuel tank, controls and other electronics all supported on a base. A primary purpose of the base is to carry the above components in a single package, while elevating the same above the ground. The base, generally, is a planar surface formed of some metallic material/compound, such as steel. The base may be required to endure number of stresses due to large weight of the generator mounted thereon.

During the operation of the generator, the base may experience some vibrations transferred from the engine and/or the alternator. Typically, the generator is supported on mounts provided in the base. The mounts may help to limit/dampen the vibration transfer to the base, and thus protect the base and other components, such as complex control systems, from failure. However, the base may not have proper provisions to access the mounts for easy assembly and removal.

Further, the generators are required to have a fuel tank to supply the fuel to the engine, for running of the generator. Typically, the manufacturers provide the fuel tank as a stand alone unit, installed in some space in the base. Alternatively, some manufacturers use welded steel plates in the base to form the fuel tank. An example of such a base for a generator is shown in US-2002/0069840.

### Summary

The present disclosure provides a base made of a composite material for supporting a generator. The base includes a support surface, a skirt depending downwardly from a periphery of the support surface, and a recess formed integrally in the support surface and being defined by a base and at least one side wall. Further, a lid is configured to be detachably mounted to the support surface, and to be arranged to close the recess.

Other features and aspects of this disclosure will be apparent from the following description and the accompanying drawings.

### Brief Description of the Drawings

Figure 1 illustrates a perspective representation of an exemplary generator with a base, according to the present disclosure;
Figure 2 illustrates a perspective view of the base of Figure 1;
Figure 3 illustrates a perspective view of the base with a lid in a raised position; and
Figure 4 illustrates a bottom perspective view of the base.

### Detailed Description

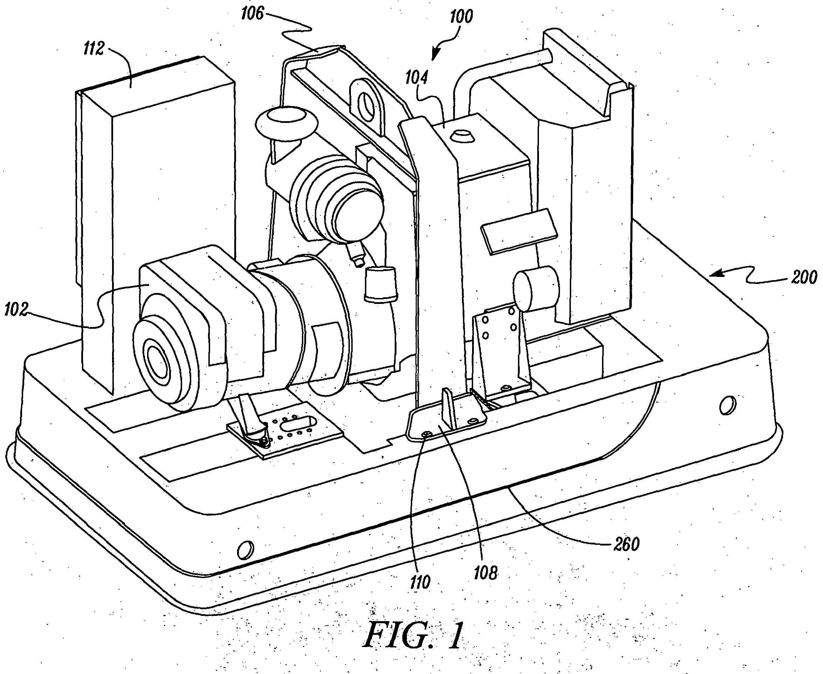

The present disclosure will now be described in detail with reference being made to accompanying figures. Figure 1 shows an exemplary embodiment of a generator 100 including a base 200, in accordance with an embodiment of the present disclosure. The generator 100 may include, but not limited to, an electric machines, motors, induction devices, or the like. The generator 100 may include an alternator 102 driven by a prime mover 104, such as a spark-ignited or compression-ignited reciprocating piston engine or a diesel or natural gas powered turbine engine.

The base 200 may be shaped to receive components of the generator 100 that are to be mounted thereon. Further, a lifting frame 106 for the generator 100 may be disposed on the base. The lifting frame 106 may be mounted on the base 200 via a bracket 108 using one or more fasteners 110. The lifting frame 106 may facilitate lifting of the generator 100 with the base 200 while transporting and/or moving. Further, the lifting frame may also support an enclosure (not shown) for the generator 100. The base 200 may also be configured to provide a support for a control panel 112 associated with the generator 100.

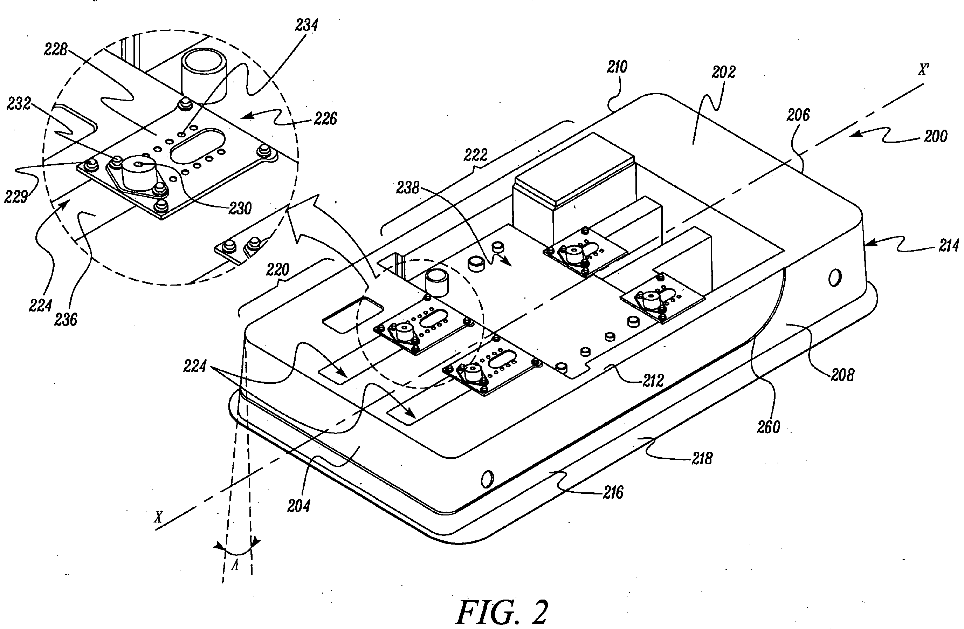

Figure 2 illustrates a perspective view of the base 200, according to an embodiment of the present disclosure. The base 200 may be made from a composite material. For example, the base 200 may be made of Dicyclopentadiene (DCPD) which is known to have high corrosion resistance, high heat resistance, high impact resistance, high stiffness, high chemical resistance and high rigidity. Further, this material is easily moldable and paintable which helps to impart structural and aesthetic characteristics to the base 200. Alternatively, the base 200 may be formed of a rigid thermoset polymeric material. It will be appreciated that the base 200 may be molded as an integral one piece structure or multiple pieces, as desired or necessary. It further will be appreciated that other materials may be used to construct the base 200, for example a suitable material, such as, steel, thermoset polymers, such as, Glass Reinforced Plastic (GRP) or the like.

As illustrated in the Figure 2, the base 200 includes a support surface 202 extending along a longitudinal axis XX'. In the illustrated embodiment, the support surface 202 has a rectangular shape with rounded corners. However, it may be contemplated, that the support surface 202 may have any other suitable shape based on the design and size requirements of the generator 100. For example, in various other embodiments, the support surface 202 may have square, oval, circular or any suitable polygonal shape.

Further, the base 200 may include a pair of opposed first side wall 204 and second side wall 206, and a pair of opposed front wall 208 and a rear wall 210, depending downwardly from a periphery 212 of the support surface 202. Hereinafter, the walls 204, 206, 208, 210 may be collectively referred to as a skirt 214 for the purpose of the further description. As may be contemplated, the support surface 202 and the skirt 214 together form the base 200, as a monolithic structure. A person ordinarily skilled in the art may understand that, the support surface 202 and the skirt 214 may be casted together to form the base 200. Alternatively, the support surface 202 and the skirt 214 may be manufactured separately, and later joined together by any suitable means known in the art, such as, fasteners, welding, rivets, or adhesive.

In an embodiment, the skirt 214 may depend downwardly from the support surface 202 in an angled manner. For example, the skirt 214 may have a draft angle A from the support surface 202 towards a lower edge 216 of the skirt 214. In an exemplary configuration, the draft angle A may be the range of about 2-10 degrees, relative to a plane lying normal to the support surface. The angled skirt 214 may provide better weight distribution and stiffness for the base 200, while the components of the generator 100 are placed thereon. Moreover, the angled skirt 214 may also aid in manufacturing by allowing easier removal of the base 200, from the mould, during the casting process.

Further, a flange 218 may extend outwardly from the skirt 214 of the base 200. In particular, the flange 218 may be extending from the lower edge 216 of the skirt 214. The flange 218 may act as the ground engaging member for the base 200, and provide increased rigidity and stability to the base 200.

The support surface 202 may be generally planar, but profiled in places to define various levels and features. In an embodiment, the support surface 202 may include one or more tiers based on the requirements. For instance, the support surface 202 may include a first tier 220 and a second tier 222. The first tier 220 and the second tier 222 may extend along different horizontal planes. In the exemplary arrangement, as shown in conjunction of Figures 1 and 2, the alternator 102 is supported on the first tier 220 and the prime mover 104 is being rested on the second tier 222. This allows for the alignment of the drive shaft (not illustrated) of the prime mover 104 with respect to the driven shaft (not illustrated) of the alternator 102, which may be disposed at different vertical heights with respect to each other.

Referring again to Figure 2, the base 200 may include one or more access pockets 224 formed in the support surface 202. The access pockets 224 may comprise depressions in the support surface 202 located at the mounting positions of the alternator 102 and the prime mover 104. In an exemplary configuration, the access pocket 224 may be rectangular in shape, extending along the longitudinal axis XX'. In an embodiment, the base 200 may also include one or more mounting members 226 secured to the support surface 202. Each of the mounting member 226 may be located over and at least partially covering a respective access pocket 224. In an alternative arrangement, two or more mounting members 226 are located over each access pocket 224.

According to an embodiment, the mounting member 226 may include a plate 228 having opposite sides fixed to the support surface 202. The plate 228 may be fixed in a manner such that the mounting member 226 is located over and bridges the access pocket 224. The plate 228 may be fixed to the support surface 202 by means of first set of fastening members 229, such as, but not limited to, nuts and bolts.

The mounting member 226 may further include one or more mounts 230, which may be made of some resilient material, such as, rubber. According to an embodiment of the present disclosure, the mounts 230 may be anti-vibration mounts (AVM's), which limit and dampen the vibration transfer, during the operation of the alternator 102 or the prime mover 104, to the base 200. The mount 230 may be attached to the plate 228 by using second set of fastening members 232, which are configured to be received in apertures 234 provided on the plate 228. As may be contemplated that, the apertures 234 may allow the mount 230 to be positioned at different locations on the plate 228. This enables the mount 230 to be adaptable for securing the alternator 102 and/or the prime mover 104 of different sizes on the support surface 202 of the base 200.

As illustrated in the exemplary embodiment of Figure 2, the base 200 may include a first set of the mounting members 226 disposed over the first tier 220 of the support surface 202, and a second set of the mounting members 226 disposed over the second tier 222 of the support surface 202. The first and the second sets of the mounting members 226 may be configured to support the alternator 102 and the prime mover 104, respectively, when the generator 100 is mounted over the base 200.

Further, in an embodiment, a portion of each access pocket 224 remains uncovered by the plate 228, to define an opening 236. Alternatively, the plate 228 may be disposed so as to define two openings 236, arranged in different orientations. As evident, the opening 236 may allow access to underneath of the mounting member 226, or specifically the plate 228, while the mounting member 226 is fixed over the support surface 202. This provides the clearance to tighten or loosen the mounts 230 to the plate 228, in the respective mounting members 226. It may be understood that in such arrangement, the access pockets 224 and the corresponding mounting members 226 may be sized and positioned accordingly, such that an easy access to underneath of the plate 228 is made possible.

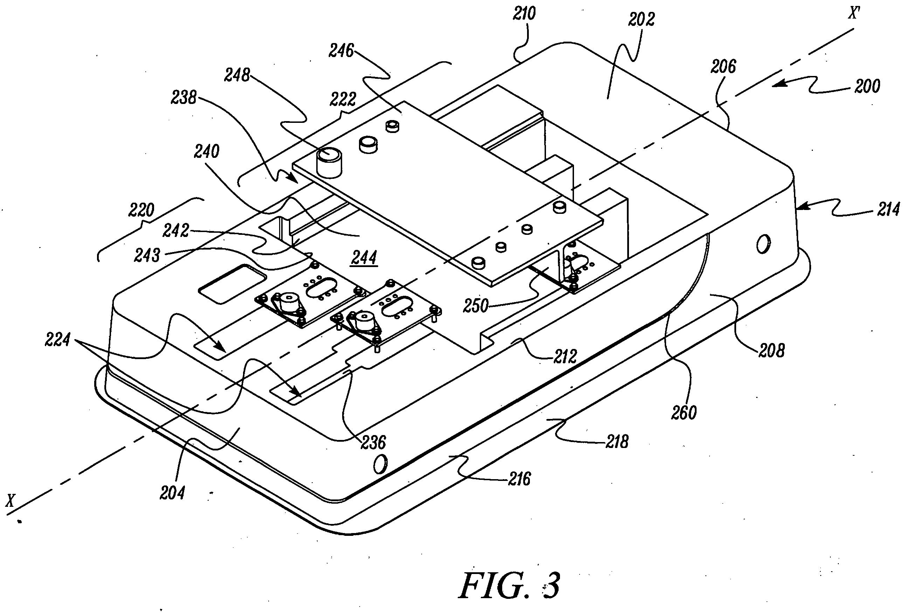

Further, as illustrated in Figures 2 and 3, the base 200 may also incorporate a fuel tank 238 therein. The fuel tank 238 may primarily include a recess 240 formed integrally during manufacturing/casting of the base 200. As illustrated, the recess 240 may include one or more secondary side walls 242, one or more secondary end walls 243 and a bottom wall 244. Further, the fuel tank 238 may include a lid 246 configured to be detachably mounted to the support surface 202 of the base 200. The lid 246 may be designed and adapted to be arranged, such that to close the recess 240. It may be evident that in Figure 3, the lid 246 has been shown raised from the support surface 202 to illustrate the recess 240.

According to an embodiment, the lid 246 may be made of metal, such as steel. The lid 246 may be sealed around the edge of the recess 240 using a suitable adhesive and/or some mechanical fasteners, known in the art. In a further embodiment, the lid 246 may include various inlet and outlet ports 248 secured thereon, to allow for supply and transfer of the fuel. The lid 246 may also incorporate a baffle 250 configured to define/separate a fuel feed chamber and a return flow chamber in the recess 240, in the fuel tank 238. The baffle 250 may, therefore, helps to avoid mixing of the fuel in the fuel tank 236.

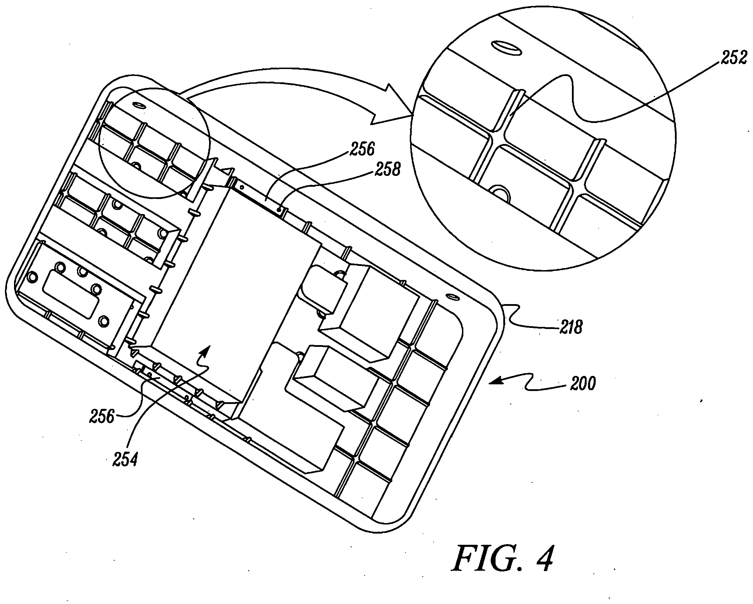

Referring now to Figure 4, the base 200 may include ribs 252 formed on an under side 254 of the support surface 202. The ribs 252 may extend outwardly from the under side 254 to a certain predetermined depth. The ribs 252 may be provided, where the stress concentration due to the weight of the generator 100 is relatively high, in the base 200. The ribs 252 may provide additional stiffness and better weight distribution to the base 200. In an exemplary configuration, the ribs 252 may have a thickness in a range of about 5 millimeters to 50 millimeters. Further, the ribs 252 may have a depth in a range of about 20 millimeters to 100 millimeters.

According to an embodiment, the ribs 252 may be arranged in some predetermined pattern. For example, the base 200 may include one set of ribs 252 parallel to the side walls 204, 206 and other set of ribs 252 parallel to the front and rear walls 208, 210, and the two sets of ribs 252 being orthogonal to each other, intersecting in between to form a wire mesh like pattern. It will be appreciated that the number and arrangement of ribs 252 may be considered merely exemplary, as greater or lesser number of ribs 252 may be employed and in differing configurations.

Further, in an embodiment, the base 200 may include a support plate 256 mounted to the under side 254 of the support surface 202. The support plate 256 may be made of steel, and include holes 258 disposed therein. The holes 258 may be configured to receive the fasteners 110 to fix the lifting frame 106 to the base 200. The support plate 256 may provide additional strength for the base 200 to support the lifting frame 106, which may be subjected to large forces when the generator 100 is lifted from thereon.

The base 200 may have other design features, such as a witness line 260, as illustrated in Figure 1-3, disposed in one or more walls of the skirt 214. The witness line 260 may enhance the aesthetics of the base 200. Further, in various embodiments, the base 200 may include numerous struts (not illustrated) to provide better weight distribution of the generator 100 mounted thereon. The base 200 may further include guides (not illustrated) disposed at the under side 254. The guides may help to engage the base 200 with some corresponding means in the carrying vehicle to facilitate transportation of the generator 100. The base 200 may also incorporate a drain (not illustrated) to channel the water collected thereon. It may be contemplated that, the base 200 may not be limited to the specific structure or configuration shown, so long as the base 200 may maintain its support, transport, installation, and removal functionality.

### Industrial Applicability

The industrial applicability of the apparatus described herein will be readily appreciated from the foregoing discussion. The present disclosure provides the base 200 which is made from composite materials and includes various features to aid in manufacturing and to save costs, as described herein. In an aspect of the present disclosure, the mounts 230 may be easily accessed via the access pockets 224. An operator may access the bottom of the plate 228 from the opening 236, to manipulate the corresponding mount 230 based on the requirement.

Further, the mounts 230 may be adjusted to position the generator 100 on the support surface 202 by moving them along the various apertures 234 on the plate 228. This may be achieved as an operator may loosen the second set of fastening member 232 from one of the apertures 234, and tighten the same fastening member 232 to other of the apertures 234, to re-position the mount 230 based on the requirement. Further, the alternator 102 and/or the prime mover 104 may be positioned accordingly on the re-positioned mounts 230.

The present disclosure incorporates the fuel tank 238 into the base 200, as a part of the molding process. This may result in significant cost savings and hassles of separately providing a fuel tank. The ports 448 provided on the lid 246 may allow for the flow of fuel into/out of the fuel tank 236. The operator may install the supply line for the fuel with one of the ports 248, which may later be supplied for the prime mover 104 by another port 248.

Further, the ribs 252 provided in the base 200 may provide additional stiffness to the base 200. The ribs 252 may provide better weight distribution in the base 200, and therefore helps to reduce stress concentration and avoid possible failure of the base 200 due to the concentrated weight of the generator 100 mounted thereon.

Although the embodiments of this disclosure as described herein may be incorporated without departing from the scope of the following claims, it will be apparent to a person skilled in the art that various modifications and variations to the above disclosure may be made. Other embodiments will be apparent to those skilled in the art from consideration of the specification and practice of the disclosure. It is intended that the specification and examples be considered as exemplary only, with a true scope being indicated by the following claims and their equivalents.

## Claims

1. A base (200) for supporting a generator (100), the base (200) comprising:
a support surface (202);
a skirt (214) depending downwardly from a periphery of the support surface(202);
a recess (240) formed integrally in the support surface (202) and being defined by a base (244) and at least one side wall (242, 243); and
a lid (246) configured to be detachably mounted to the support surface (202), the lid (246) further adapted to be arranged to close the recess (240).

2. The base (200) of claim 1, wherein the recess (240) and the lid (246) together form a fuel tank (238) for the generator (100).

3. The base (200) of claim 1, wherein the support surface (202) and skirt (214) are formed as a monolithic structure.

4. The base (200) of claim 1, wherein the support surface (202) and skirt (214) are manufactured separately and joined together.

5. The base (200) of claim 1, wherein the recess (240) is generally rectangular having two secondary side walls (242) and two secondary end walls (243).

6. The base (200) of claim 2, wherein the lid (246) includes one or more ports (248) disposed thereon, and the one or more ports (248) configured to allow for supply and transfer of a fuel in the fuel tank (238).

7. The base (200) of claim 2, wherein the lid (240) includes a baffle (250) configured to separate a fuel feed chamber and a return feed chamber in the recess (240) of the fuel tank (238).

8. The base (200) of claim 1, wherein the lid (246) is sealed around an edge of the recess (240) using an adhesive and/or mechanical fasteners.

9. The base (200) of claim 1, wherein the lid (246) is made of steel.

10. The base (200) of claim 1 including a plurality of recesses (240) formed in the support surface (202), the recesses (240) are covered by at least one lid (246).

11. The base (200) of claim 1 is made of a composite material.

12. The base (200) of claim 11, wherein the composite material is Dicyclopentadiene.

13. The base (200) of claim 1 wherein the skirt (214) is formed from opposed first and second side walls (204, 206) and opposed front and rear walls (208, 210), which are integral to the support surface (202).

14. The base (200) of claim 1, wherein the skirt (214) flares outwardly from the support surface (202) towards a lower edge (216).

15. The base (200) of claim 1, wherein the skirt (214) includes a flange (218) extending outwardly from a lower edge (216).

## Patentansprüche

1. Ein Unterbau (200) zum Lagern eines Generators (100), welcher Unterbau (200) aufweist:
eine Lageroberfläche (202);
eine Schürze (214), die von einer Peripherie der Lageroberfläche (202) nach unten abhängt;
eine Aussparung (240), die in der Lageroberfläche (202) eingelassen gebildet ist und von einem Unterbau (244) und mindestens einer Seitenwand (242, 243) definiert wird; und
ein Deckel (246), der eingerichtet ist, um lösbar an der Lageroberfläche (202) montiert zu werden, welcher Deckel (246) ferner angepasst ist, um in der Nähe der Aussparung (240) angeordnet zu werden.

2. Der Unterbau (200) nach Anspruch 1, wobei die Aussparung (240) und der Deckel (246) zusammen einen Treibstofftank (238) für den Generator (100) bilden.

3. Der Unterbau (200) nach Anspruch 1, wobei die Lageroberfläche (202) und Schürze (214) als eine monolithische Struktur gebildet sind.

4. Der Unterbau (200) nach Anspruch 1, wobei die Lageroberfläche (202) und Schürze (214) getrennt hergestellt und zusammengefügt sind.

5. Der Unterbau (200) nach Anspruch 1, wobei die Aussparung (240) allgemein rechtwinklig ist und zwei sekundäre Seitenwände (242) und zwei sekundäre Endwände (243) hat.

6. Der Unterbau (200) nach Anspruch 2, wobei der Deckel (246) einen oder mehrere darauf angeordnete Anschlüsse (248) umfasst, und die einen oder mehreren Anschlüsse (248) eingerichtet sind, um die Versorgung und Übertragung von einem Treibstoff in den Treibstofftank (238) zu ermöglichen.

7. Der Unterbau (200) nach Anspruch 2, wobei der Deckel (240) ein Trennblech (250) umfasst, das eingerichtet ist, um eine Treibstoffzuführungskammer und eine Rückzuführungskammer in der Aussparung (240) des Treibstofftanks (238) zu separieren.

8. Der Unterbau (200) nach Anspruch 1, wobei der Deckel (246) unter Verwendung eines adhäsiven oder von mechanischen Befestigungsmitteln um eine Kante der Aussparung (240) abgedichtet ist.

9. Der Unterbau (200) nach Anspruch 1, wobei der Deckel (246) aus Stahl besteht.

10. Der Unterbau (200) nach Anspruch 1, umfassend eine Mehrzahl von Aussparungen (240), die in der Lageroberfläche (202) gebildet sind, welche Aussparungen (240) von mindestens einem Deckel (246) bedeckt sind.

11. Der Unterbau (200) nach Anspruch 1, bestehend aus Verbundmaterial.

12. Der Unterbau (200) nach Anspruch 11, wobei das Verbundmaterial Dicyclopentadien ist.

13. Der Unterbau (200) nach Anspruch 1, wobei die Schürze (214) aus sich gegenüberliegenden ersten und zweiten Seitenwänden (204, 206) und gegenüberliegenden vorderen und hinteren Wänden (208, 210) gebildet ist, die in die Lageroberfläche (202) eingelassen sind.

14. Der Unterbau (200) nach Anspruch 1, wobei die Schürze (214) von der Lageroberfläche (202) nach außen hin zu einer niedrigeren Kante (216) ausbricht.

15. Der Unterbau (200) nach Anspruch 1, wobei die Schürze (214) einen Flansch (218) umfasst, der sich von einer niedrigeren Kante (216) nach außen erstreckt.

## Revendications

1. Base (200) pour le support d'un générateur (100), la base (200) comprenant :
une surface de support (202) ;
une jupe (214) pendant vers le bas depuis une périphérie de la surface de support (202) ;
un évidement (240) formé d'un seul tenant dans la surface de support (202) et défini par une base (244) et au moins une paroi latérale (242, 243) ; et
un couvercle (246) configuré pour être monté de manière détachable sur la surface de support (202), le couvercle (246) étant en outre adapté pour être agencé de sorte à fermer l'évidement (240).

2. Base (200) selon la revendication 1, dans laquelle l'évidement (240) et le couvercle (246) forment ensemble un réservoir de carburant (238) pour le générateur (100).

3. Base (200) selon la revendication 1, dans laquelle la surface de support (202) et la jupe (214) sont formées comme une structure monolithique.

4. Base (200) selon la revendication 1, dans laquelle la surface de support (202) et la jupe (214) sont fabriquées séparément et jointes ensemble.

5. Base (200) selon la revendication 1, dans laquelle l'évidement (240) est généralement rectangulaire avec deux parois latérales secondaires (242) et deux parois d'extrémité secondaires (243).

6. Base (200) selon la revendication 2, dans laquelle le couvercle (246) comporte un ou plusieurs orifices (248) disposés dessus et les un ou plusieurs orifices (248) configurés pour permettre la fourniture et le transfert d'un carburant dans le réservoir de carburant (238).

7. Base (200) selon la revendication 2, dans laquelle le couvercle (240) comporte une chicane (250) configurée pour séparer une chambre d'alimentation en carburant et une chambre d'alimentation en retour dans l'évidement (240) du réservoir de carburant (238).

8. Base (200) selon la revendication 1, dans laquelle le couvercle (246) est rendu étanche autour d'une arête de l'évidement (240) en utilisant un adhésif et/ou des éléments de fixation mécaniques.

9. Base (200) selon la revendication 1, dans laquelle le couvercle (246) est réalisé en acier.

10. Base (200) selon la revendication 1, comprenant une pluralité d'évidements (240) formés dans la surface de support (202), les évidements (240) sont couverts par au moins un couvercle (246).

11. Base (200) selon la revendication 1, qui est réalisée avec un matériau composite.

12. Base (200) selon la revendication 11, dans laquelle le matériau composite est un dicyclopentadiène.

13. Base (200) selon la revendication 1, dans laquelle la jupe (214) est constituée de première et seconde parois latérales (204, 206) opposées et de parois avant et arrière opposées (208, 210), qui sont d'un seul tenant avec la surface de support (202).

14. Base (200) selon la revendication 1, dans laquelle la jupe (214) s'évase vers l'extérieur depuis la surface de support (202) vers une arête inférieure (216).

15. Base (200) selon la revendication 1, dans laquelle la jupe (214) comporte une bride (218) s'étendant vers l'extérieur depuis une arête inférieure (216).
